Europäisches Patentamt

European Patent Office

Office européen des brevets

(19)

(11) Publication number: **0 207 553 B1**

## EUROPEAN PATENT SPECIFICATION

(12)

(45) Date of publication of patent specification: **15.05.91**  (51) Int. Cl.⁵: **A22C 21/00**

(21) Application number: **86201063.4**

(22) Date of filing: **18.06.86**

(54) Filetting apparatus.

(30) Priority: **18.06.85 NL 8501748**

(43) Date of publication of application:
**07.01.87 Bulletin 87/02**

(45) Publication of the grant of the patent:
**15.05.91 Bulletin 91/20**

(84) Designated Contracting States:
**AT BE CH DE FR GB IT LI LU NL SE**

(56) References cited:
**EP-A- 0 118 963      EP-A- 0 132 890**
**EP-A- 0 168 865      DE-A- 2 110 080**
**US-A- 455 017        US-A- 4 385 419**

(73) Proprietor: **SYSTEMATE HOLLAND B.V.**
**Burgemeester de Zeeuwstraat 52**
**NL-3281 AK Numansdorp(NL)**

(72) Inventor: **Verrijp, Bastiaan**
**Burg. de Zeeuwstraat 103**
**NL-3281 AG Numansdorp(NL)**
Inventor: **Wallbridge, William L.**
**Tote Hill Sherfield English**
**Romsey Hampshire(GB)**

(74) Representative: **Kooy, Leendert Willem et al**
**OCTROOIBUREAU VRIESENDORP & GAADE**
**P.O. Box 266**
**NL-2501 AW The Hague(NL)**

Rank Xerox (UK) Business Services

## Description

The invention relates to a filleting machine for the removal of the fillets of the carcass of eviscerated poultry of which the legs and the wings have been removed already, comprising a frame in which a drivable conveyor is mounted, on which conveyor at regular distances a number of retaining means is provided to move the poultry through an incision device and through a gate member positioned in the lower run of the conveyor to push the fillets off the carcass, and means to ensure that the carcasses to be processed, which are put onto the retaining means in the upper run of the conveyor, remain seated on the retaining means at the transition to the lower run of the conveyor.

Such a machine is known from Ep-A-O 168 885 published on 22.01.86. When filleting carcasses by the known machine the inner and outer fillets are frequently separated, which is not very much appreciated by the market, and besides the inner fillets are easily damaged.

The invention aims to improve the known machines. According to the invention, this has basically been achieved by the feature that a mechanism having a spring-loaded centre block for rolling the upper muscle off the sternum of the carcass is tiltable about a horizontal axis between the gate member and the incision device.

A pair of side blocks can be reciprocally movable in a direction substantially lateral to the machine to press the wing joint bones of the carcass towards each other just in front of the gate member. This feature is known per se from EP-A-0 132 890.

Other details and advantages of the invention will appear in the elucidation of the invention based upon the drawings, which show two embodiments of a filleting machine of the invention. In the drawing:

fig. 1 shows a schematic top view of the prototype of the machine,

fig. 2 shows a schematic side view of the machine of fig. 1,

fig. 3 shows on a larger scale in perspective a retaining means with chicken carcass,

fig. 4 shows a side view of a retaining means as used in the filleting machine according to the invention,

fig. 5 shows a top view of the retaining means of fig. 4,

fig. 6 shows a front view of the retaining means of fig. 4,

fig. 7 shows on a larger scale a view according to the line VII-VII of fig. 2 with the guiding blocks of the first centering device in two different positions,

fig. 8 and 9 show a longitudinal view and a top view of the left-hand side block of fig. 7,

fig. 10 shows on a larger scale the portion of the filleting machine of fig. 1 where the second centering device with side blocks, the centre block and the filleting tunnel are present,

fig. 11-14 show longitudinal and side views of the centre block and the tilting mechanism thereof,

fig. 15-17 show a longitudinal, a side and a top view of a filleting tunnel half,

fig. 18 shows a top view of a meat unloader,

fig. 19 and 20 show a longitudinal and a top view of a meat collector,

fig. 21 and 22 show a side and a longitudinal view of an incision device,

fig. 23 shows a view of the incision knive according to the line XXIII-XXIII of fig. 21,

fig. 24 and 25 show a longitudinal view and a top view, resp. of the final design with the aid of which a few improvements with regard to the prototype will be illustrated,

fig. 26 shows in perspective the stationary incision knives,

fig. 27 and 28 show a longitudinal view and a side view, resp., of a new retaining means adapted to cooperation with the new incision knives,

fig. 29 shows in perspective the new filleting tunnel, and

fig. 30 shows in perspective the new meat unloader with pertaining meat catcher.

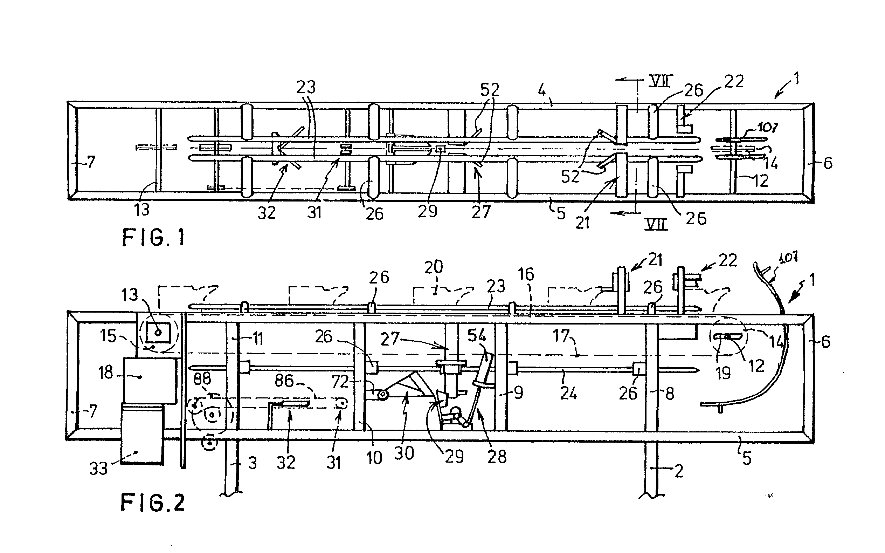

The filleting machine represented in fig. 1 and 2 consists of a frame 1 with a pair of front legs 2 and a pair of rear legs 3. The frame is constructed from angle steel and comprises two side windows 4 and 5, a front window 6 and a rear window 7. In the side windows columns 8-11 are present which partly serve as stiffening and are partly used for supporting various parts to be illustrated later on.

The frame provides a pivotable support for two chain wheel shafts 12 and 13 on which chain wheels 14 and 15 are disposed which determine the transitions between an upper part 16 and a lower part 17 of a chain conveyor drawn in dotted lines. The chain wheel shaft 13 may be driven by an electromotor 18 and in order to keep the tension of the chain 16/17 at the correct value the shaft 12 is slidable in an oblong hole 19 in longitudinal direction of the machine.

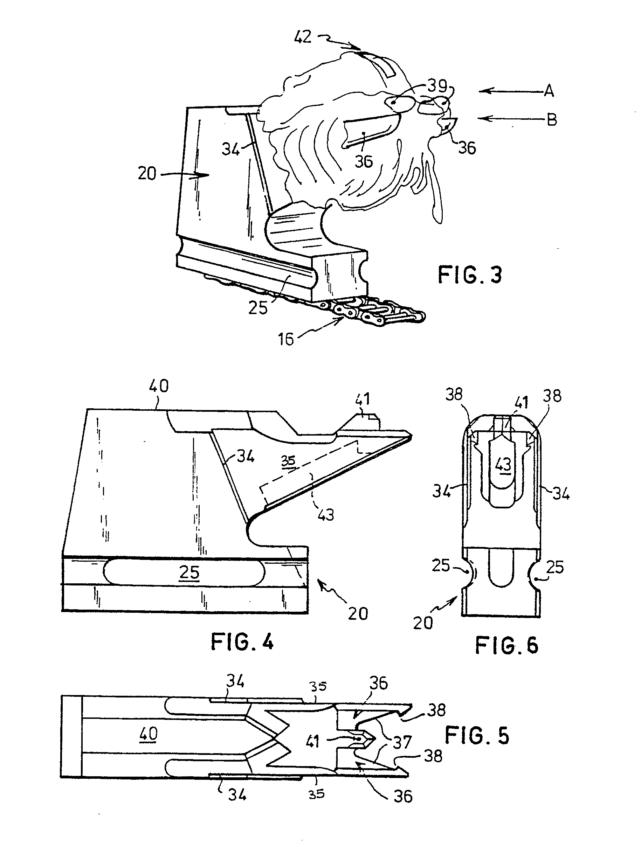

At regular distances a plurality of retaining means 20 is disposed on the chain conveyor 16/17 which in fig. 1 in the top part 16 of the machine move from the left to the right and in the lower part 17 from the right to the left. They will be illustrated with the aid of figures 3-5.

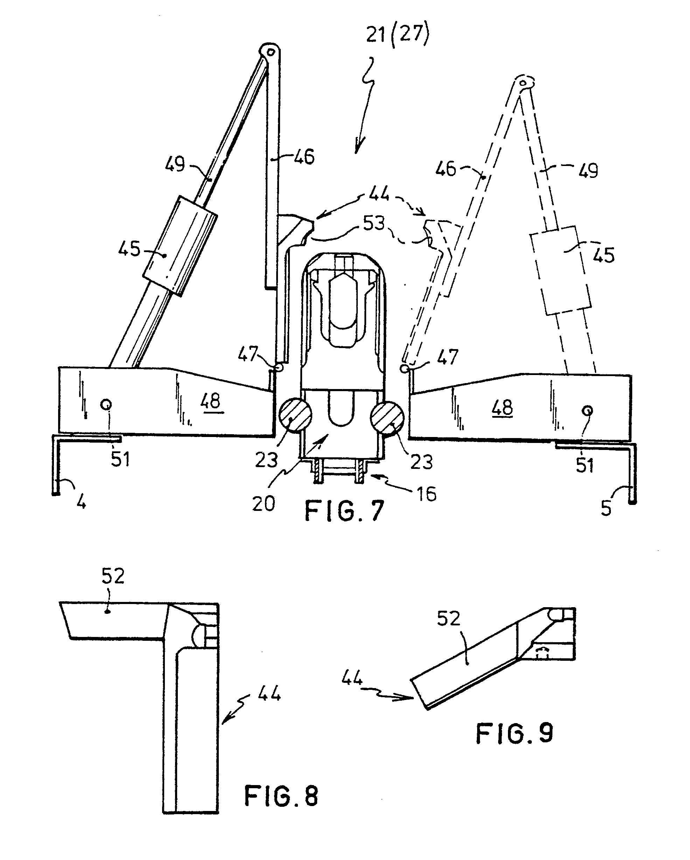

In the area between the pairs of bars 8 and 9 a first centering device 21 is present next to and over the top part 16 of the conveyor which will be illustrated with the aid of figures 7-9.

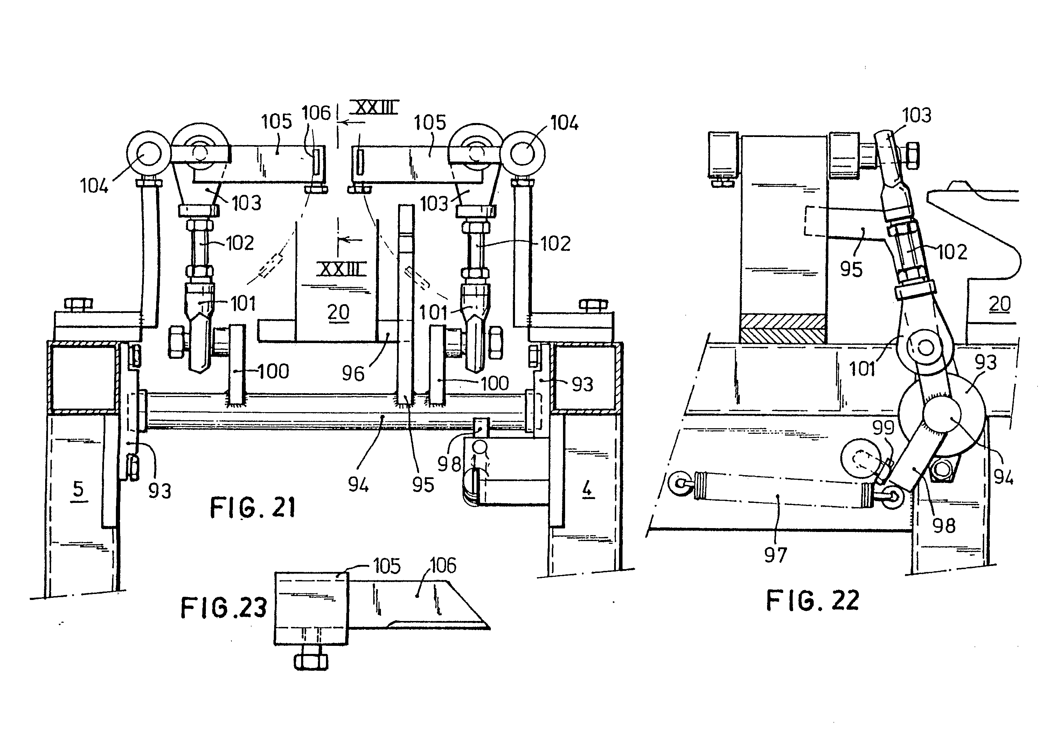

Next to the centering device 21 an incision device 22 is applied which will be illustrated with the aid of figures 21-23.

The retaining means both in the top part 16 and in the lower part 17 are guided by parallel uppermost and lowermost guide rod pairs 23 and 24 which fit in semicircular lateral recesses 25 on either side of the retaining means 20. The guiding rods are connected to the frame 1 by means of brackets 26.

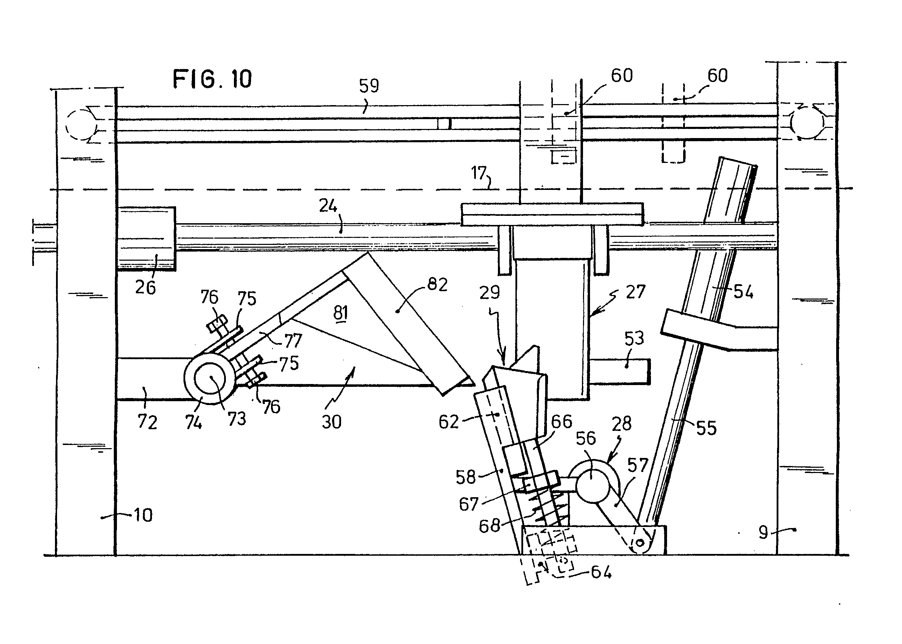

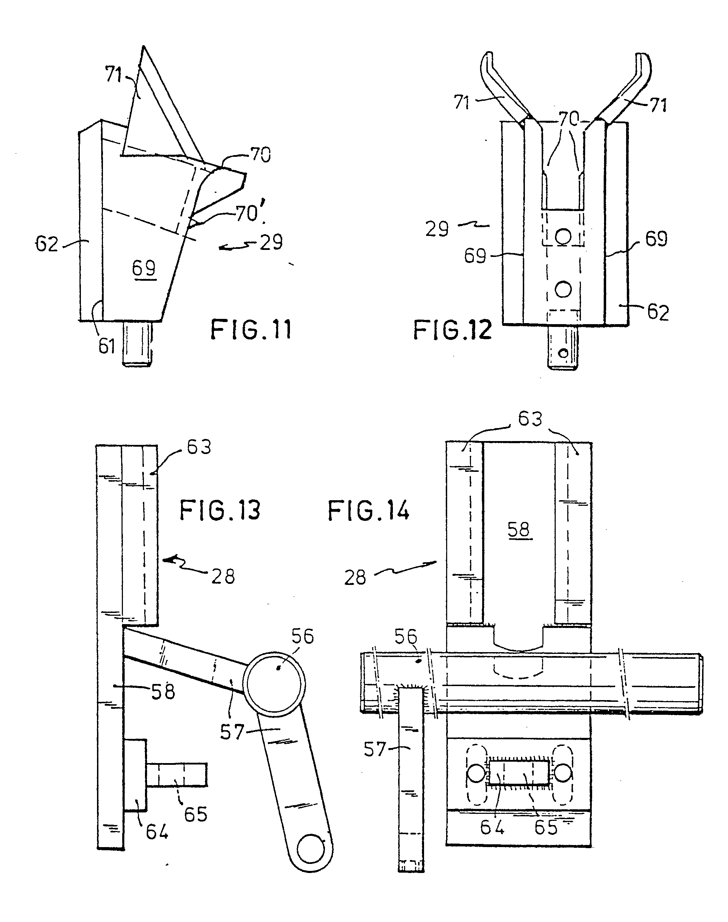

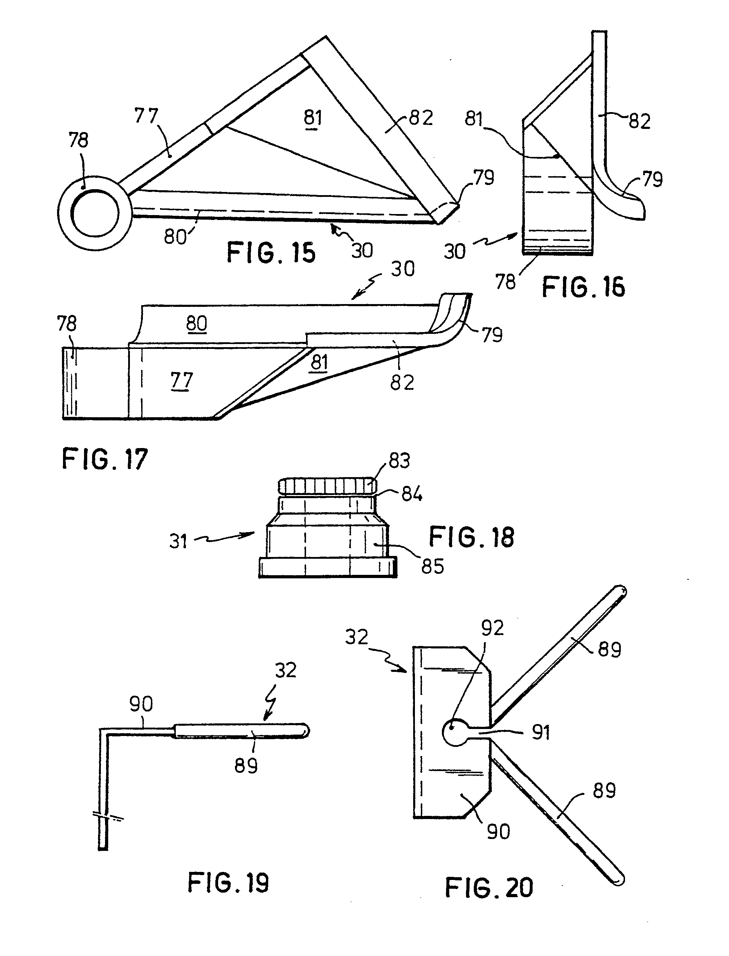

In the area between the pairs of bars 9 and 10, represented on a larger scale in fig. 10,successively a second centering device 27 bearing some resemblance to the first centering device 21 and for that reason also being discussed with the aid of figures 7-9, a tilting mechanism 28 (fig. 13 and 14) with centre block 29 (figures 11 and 12) for rolling off the uppermost muscle of the breast-bone from the carcass, and a filleting tunnel 30 (figures 15-17) for stripping the fillets from the carcass, are present next to and under the lower part 7 of the conveyor.

In the area between the pairs of bars 10 and 11 a meat unloader 31 (fig. 18) and a meat catcher 32 (figures 19 and 20) are present which may be driven by a second electromotor 33.

Herewith the prototype of the filleting machine according to the invention is discussed in substance and some details can now be discussed.

The retaining means 20 (figures 3-6)

The retaining means 20 shows a cross-section configuration adapted to the interior of the carcass of the poultry and preferably consists of plastic material.

About halfway its length an inclined shoulder 34 is applied whose thickness is approx. equal to the thickness of the carcass. It can be seen in fig. 3 how a carcass is placed on the retaining means 20.

The part on the right hand of the shoulder in figures 4 and 5 is essential for the invention. The longitudinal surfaces 35 bordering the shoulders 34 extend forwardly mutually parallelly and constitute near the end the outer surfaces of protrusions 36 which protrude outwardly through the carcass when retaining a carcass. These protrusions 36 have inner surfaces 37 extending obliguely towards each other with barbs 38 which engage just pass the wing joint bones 39 (figure 3) of the carcass when the carcass has been positioned far enough on the retaining means by hand or by the first centering device 21.

The upper surface 40 of the retaining means 20 is recessed in such a way that near the foreward end of the retaining means 20 an upwardly directed cam 41 is formed which fits in a (not visible) cavity of the breast bone 42 of the carcass.

The barbs 38 and the cam 41 see to it that the carcass remains on the retaining means after the retaining means has left the upper part 16 of the filleting machine.

The lower side of the protrusion has a recess 43 obtained by milling and also serving for receiving carcass portions.

Centering devices 21 and 27 (figures 7-9)

Centering devices 21 and 27 mainly consist of a pair of side blocks 44 which are tiltable in transverse direction to the retaining means 20. In fig. 7 the left-hand block drawn in continuous lines is in the position in which the fillet is fixedly positioned on the retaining means. Not drawn connecting means see to it that the side blocks immediately after having performed their function are swung to the position represented in dotted lines by the cylinders 45. After the remaining part of the retaining means 20 has been passed, they return in the position represented in continuous lines.

The side blocks 44 are pivotably connected to supports 48 about shafts 47 which supports are fastened to the side windows 4 and 5 and by screws (not represented) to swivelling bars 46 the extremities of which are pivotably connected to piston rods 49 of the air cylinders 45 which themselves are supported on the supports 48 pivotably about axes 51.

In longitudinal and top view (figures 8 and 9) the side-blocks 44 have a centering plate 52 and the design of the centering surfaces 53 facing each other is attuned to the average appearance of the wing joint bones 39 (fig. 3) of the poultry. These centering surfaces also push the forked bones more inwardly and in result they can pass through the slot of the centre block 29.

The second centering device 27 at the lower part 17 of the conveyor is of the same construction and operation as the above described first centering device, but it is of course upside down. The function of the first centering device was to prevent a carcass from falling from a retaining means; the object of the second centering device is making the carcass ready for the supply to the filleting tunnel 30.

The centre block 29 and its tilting mechanism 28 - (figures 10-14)

According to figure 10 to the column 9 an air cylinder 54 is fastened. The piston rod 55 of this

cylinder is pivotally connected to one extremity of a lever 57 supported on the frame 1 by a shaft 56 and the other extremity of which is united to a centre block carrier 58 for the tiltable support of the centre block 29 for scraping the forked bone and stripping the normal upper muscle of the breast bone from the carcass, as well as loosening the outer fillets and the inner fillets.

So, parts 54-58 constitute the tilting mechanism 28. As the muscle in question is positioned somewhat backwardly with respect to the wing joint bones the cylinders 45 and 54 of the second centering device 27 and the tilting mechanism 28 resp. are controlled by approximation switches 60 schematically represented on a beam 59 in fig. 10 so that the side blocks 44 and the centre block 29 are advanced almost simultaneously to the active position represented in fig. 10, but the side blocks are moved back to the inactive positions apparently earlier than the centre block 29.

The metal centre block 29 has a back wall 61 to which a plastic slide plate 62 can be fastened which is wider than the back wall. To the centre block carrier 58 of the tilting mechanism 28 on one side of the connection with the lever 57 two angle irons 63 are welded, in which the slide plate 62 can move rectilinearly, and on the other side of the connection with the lever 57 a support 64 with a hole 65 through which a centre block rod 66 (fig. 10) can slide in a reciprocable manner. About this centre block rod 66 between the support 64 and an adjusting ring 67 a spring 68 is present, so that the centre block 29 is supported to the tilting mechanism in a springing manner.

The centre block 29 has two side walls 69 extending in longitudinal direction of the machine and having pointed fore-ends 70 which clean the forked bone and loosen the inner fillets. Thereinbetween an adjustable chisel 70' loosening the upper muscle is present. The leading edge of the pointed fore-parts loosen muscles attached to the wing joint bones. These muscles extend through the inner fillets. When they are not cut loose, loose inner fillets are obtained. Also centering cheeks 71 are applied, whose inner circumferences correspond to the appearance of the carcass still comprising fillets and which clean the bent gouge collar bone and therewith loosen the fillets.

### The filleting tunnel 30 (figures 10 and 15-17)

To the columns 10 vertically adjustable arms 72 are applied for supporting a filleting tunnel shaft 73. To the bush 74 of the arm 72 two strips 75 are welded wherein screw thread holes are made for receiving adjusting screws 76 which can cooperate with an outer edge 77 of a filleting tunnel half 30 at the level of the filleting tunnel bush 78 also fitting to the filleting tunnel shaft 73. By this construction the stripping edges 79 of the filleting tunnel halves 30 can precisely be adjusted to the retaining means 20. The stripping of the fillets then takes place in the direction of arrow A in fig. 3, but then of course in the lower part of the machine.

The filleting tunnel halves 30 have horizontal inner edges 80 facing each other which are spaced that far that the breast bone of the carcass can pass between them. The side walls 81 are positioned so obliguely in respect of the moving direction of the retaining means 20 that the fillets when passing the retaining means through the filleting tunnel are more or less folded under the influence of these side walls, so pass along the outer edge of the side walls 81 but are still connected to the carcass. The access to the filleting tunnel is bounded by gate halves 82 which have, of course, such dimensions that the retaining means plus carcasses retained thereon can pass. After the filleting tunnel the fillets only stick to the breast bone.

### The meat unloader 31 (fig. 18)

The meat unloader 31 consists of two cross cut ends 84 of stepped plastic bushes 85 having confronting teeths 83, which bushes can clockwise rotate when driven by a meat unloader chain 86 which is branched from the tooth wheel transmission 87 of the second electromotor 33 for driving a carcass remover 88, known per se.

### The meat catcher 32 (figures 1, 2 and 19, 20)

In case the fillets would not be removed by the meat unloader 31 this will certainly occur by the meat catcher 32 which consists of two divergent rods 89 and a meat catching supporting plate 90 with a slot 91 debouching into a relatively small hole 92.

### The incision device 22 (figures 21-23)

Bearings 93 are applied to sides of the side windows 4 and 5 facing each other for pivotably supporting a shaft 94. A long lever arm 95 is attached to this shaft 94, which arm can be swung downwardly from a substantially upward position counter-clockwise by side strips 96 of the retaining means 20 in figure 22, and which can be swung back by a spring 97 after having passed the retaining means 20, a short lever arm 98 abutting a stop 99.

Two upwardly directed protrusions 100 are supported on the shaft 94 and each carry on its free end a rod head 101 which are each, via a rod shaft 102, connected to another rod head 103 which are each pivotably connected to a knive carrier 103 pivotable about a shaft 104.

The knife carriers 105 support the incision knives 106 which move exactly between the protrusions 36 of a retaining means 20 according arrow B of fig. 3 in the poultry and then cut meat loose from the carcass along circular sector paths, so that the meat yield per carcass becomes higher.

The side strips 96 of the retaining means 20 could be omitted in case of a somewhat different position of the long lever arm 95, but may also serve to guarantee that the retaining means 20 get into the pairs of guide rods 23, 24 at the transitions between the upper part 16 and the lower part 17 and the other way round. At these transitions then a (not represented) bent guide strip can be applied which prevents the retaining means 20 from tilting laterally with regard to the chain conveyor.

Operation of the machine

The operation will largely be clear from the preceding specification. Below the meat unloader 31 and meat catcher 32 a conveyor belt may be applied for discharging, checking and packing the fillets. Since the conveyor belt in question is positioned preferably at a level above the floor on which the said acts can readily be performed, the lower part 16 of the conveyor will get at such a level above the floor that it turns out to be necessary to attach a platform to the legs 2 and 3, so that the machine can be loaded.

Although the machine invented is excellently suitable for making complete fillets, of course half fillets can be made with it as well, but that is a deliberate choice then.

Otherwise, half fillets can be made in an easier manner, because the halves are only connected to each other by a weak breast bone muscle and can readily get loosened from each other.

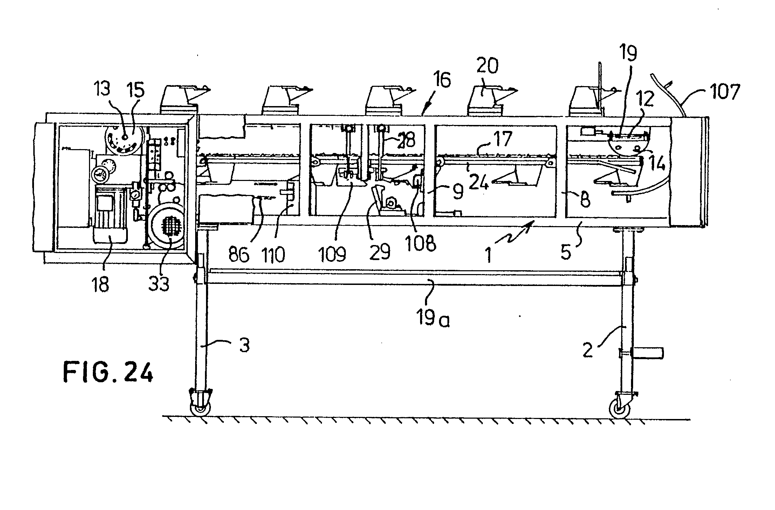

In figures 24-30 the major differences are described between the prototype of the filleting machine and the final embodiment thereof. Unaltered parts keep their reference numerals, whereas new parts will be indicated by new numerals.

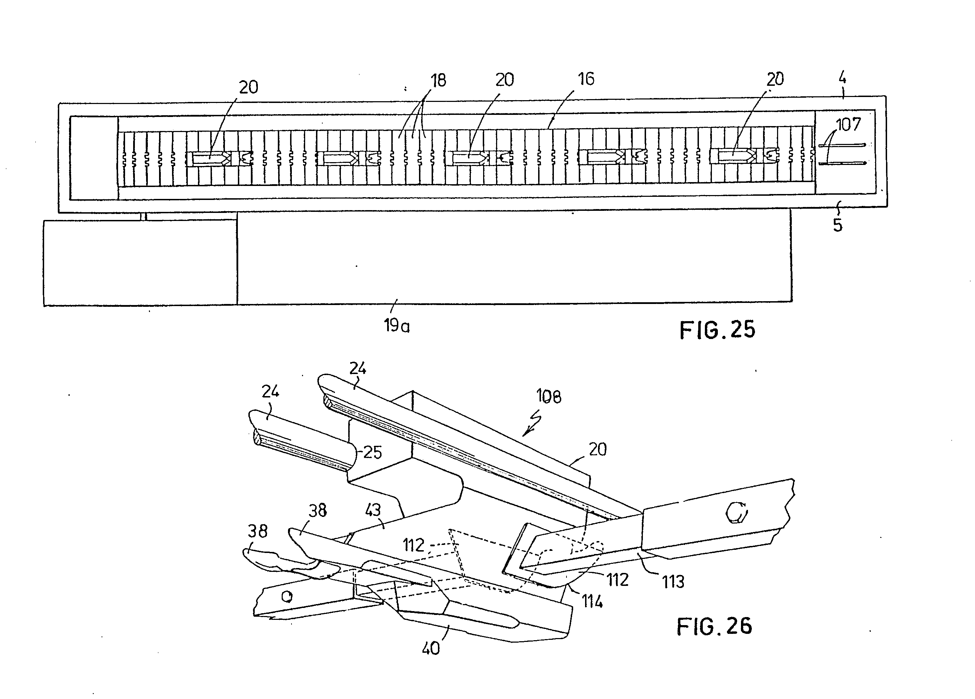

The filleting machine represented in fig. 24 and 25 consists of a frame 1 with a pair of front legs 2 and a pair of rear legs 3. The frame is constructed from metallic tubular profiles and comprises two side windows 4 and 5 with columns 8-10 which partly serve as a stiffening and partly for supporting various parts of the machine to be illustrated later on.

The frame provides a pivotable support for two chain wheel shafts 12 and 13 on which chain wheels 14 and 15 are applied which determine the transitions between an upper part 16 and a lower part 17 of a caterpillar conveyor with link plates 18. The chain wheel shaft 13 can be driven by an electromotor and in order to keep the tension of the caterpillar 16/17 at the correct value the shaft 12 is slidable in longitudinal direction of the machine.

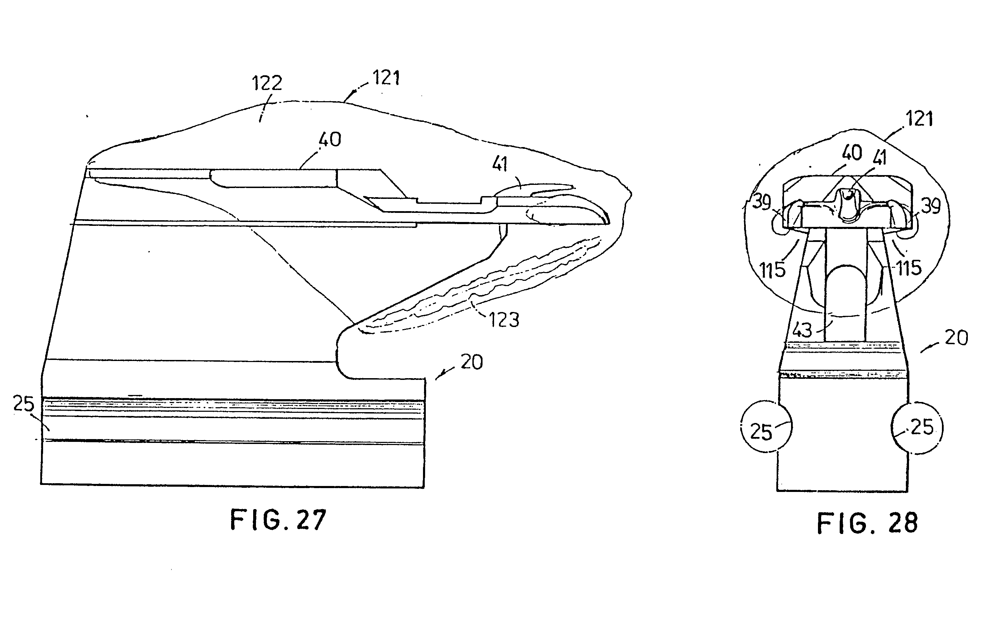

At regular intervals a plurality of retaining means 20 is applied to the conveyor 16-17 which in fig. 24 in the upper part 16 of the machine move from the left to the right and in the lower part 17 from the right to the left. The fellow-workers standing on a flight of steps put the carcasses onto the retaining means 20 moving in the upper part 16 and being illustrated with the aid of figures 27 and 28. In lower part 17 the retaining means are additionally guided by guide bars 24.

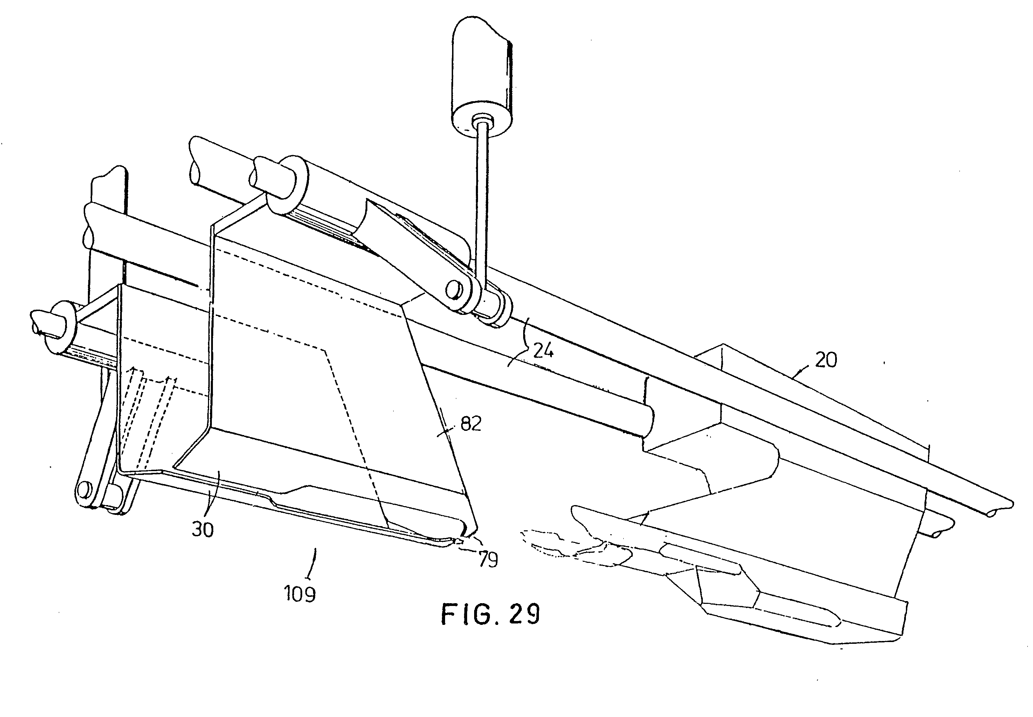

In the area between the pairs of columns 9 and 10 next to and under the lower part 17 of the conveyor successively the incision device 108 with fixed knives (fig. 26), a tilting mechanism 28 (like figures 13 and 14) with centre block 29 (like figures 11 and 12) for rolling off the upper muscle from the breast bone of the carcass, and a tiltable filleting tunnel 109 (fig. 29) for stripping the fillets from the carcass, are present.

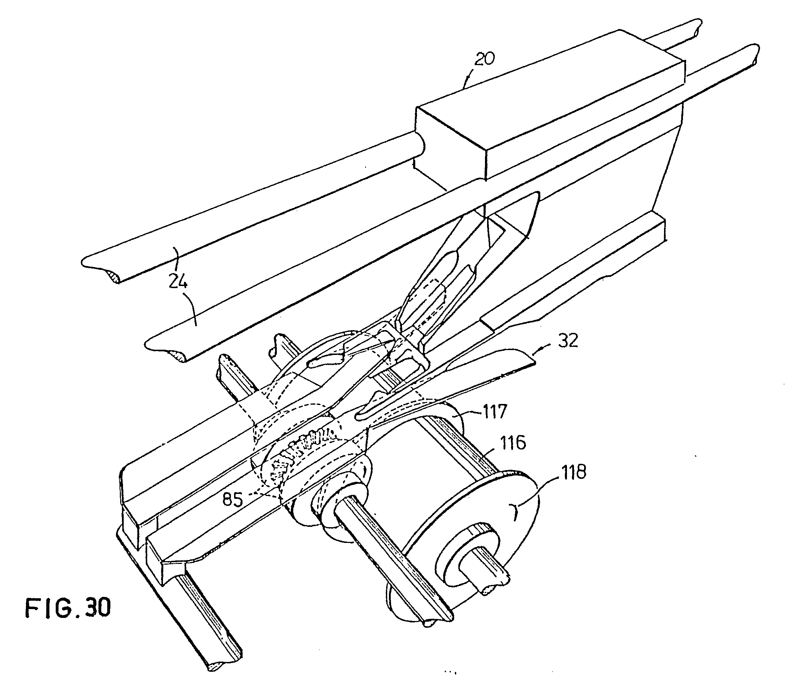

In the area after the pairs of columns 10 a meat unloader 110 with pertaining catcher 111 (fig. 30) is present, the meat unloader being adapted to be driven by a second electromotor. A carcass remover is represented at 88.

Herewith the final embodiment of the filleting machine according to the invention has been discussed in substance and now some details can be discussed.

Fig. 24 showing the final design of the filleting machine has mainly the following differences with regard to figure 1.

The first centering device 21 which was illustrated with the aid of figures 7-9 has been replaced and the same applies to the incision device 22 with moving knives 106 illustrated with the aid of figures 21-23. The final filleting machine, however, comprises a breast guiding means 107 mainly consisting of two parallel bent rods, which serves both as a first centering device and as means for preventing the carcasses from being released, and an incision device 108 with fixed knives which will be illustrated with the aid of figure 26. The last-mentioned alteration otherwise also leads to an alteration of the retaining means 20 (fig. 27 and 28).

The filleting tunnel 30 has been replaced by a tunnel 109 (fig. 29) with tunnel parts foldable about horizontal axes, so that carcasses having a broken bent gouge collar bone can be thrown off between times and it cannot be so that after a few seconds a following chicken collides with a jammed chicken.

For the stepped bushes 85 of the meat unloader 31, whose teeth 83 otherwise are directed inwardly now instead of radially, a depositing roller is applied, so that the fillets are spread on a (not represented) discharge conveyor belt by the new meat unloader 110 instead of, like with the prototype, on a heap.

Incision device 108 (figure 26)

An incision device 108 consists of two stationary knives 112 which at an angle of substantially 15° to the moving direction of the carcasses are applied to the ends of knife carriers 113 which are adjustably fastened to the columns 9 of the frame. With this incision device, provided it is well adjusted, a yield increase up to 100% (like by hand) is possible, because the knives with the sharp edge 114 remove a piece of meat being stuck with a web over the ribs. This web comes along as well, because actually it is rather stripping than cutting. Only the sharp edge 114 makes an incision, the remaining part of the leading edge is blunt and thereby tears the web loose further. This appears to be possible because the ribs are resilient.

The retaining means 20 (fig. 27 and 28)

The above is successful only when the retaining means 20 on either side have a recess 115 to impress the ribs extending in a circular way. Otherwise, there is no difference with the retaining means 20 of figures 3-6, with the exception that the protruding part can better be made of metal than of plastic.

For elucidation in figures 27 and 28 also a carcass 121 is shown with a breast 122 and a back part 123. By the better guiding with amongst others the breast guiding means 107 it is no longer necessary for the retaining means to comprise barbs.

The filleting tunnel 109 (fig. 29).

The manners in which the tunnel halves 30 can be made foldable about horizontal axes are obvious to a skilled worker and will not be mentioned any further here.

The meat unloader 110 (fig. 30)

For the stepped bushes 85 with teeth axially facing each other now, said bushes 85 being driven by the meat unloader chain 86, a large roller 116 is disposed with an elevated edge 117 in the centre.

The large roller draws the fillets when rotated in the direction of arrow 118 somewhat downwardly so that the outer fillets are slightly tensioned and are put down in a spreaded manner. By the elevated edge 117 it is achieved that the inner fillets are not loaded and thereby remain connected to the outer fillets. Now, the meat catcher 32 is positioned over the bushes 85 and the large roller 116 and directs the cam of the carcass between the bushes 85.

Also other embodiments than represented in the drawings are comprised by the scope of the claims.

## Claims

1. A filleting machine for the removal of the fillets of the carcass of eviscerated poultry of which the legs and the wings have been removed already, comprising a frame (1) in which a drivable conveyor (16, 17) is mounted, on which conveyor at regular distances a number of retaining means (20) is provided to move the poultry through an incision device (22, 108) and through a gate member (30) positioned in the lower run (17) of the conveyor to push the fillets off the carcass, means (107) to ensure that the carcasses to be processed, which are put onto the retaining means (20) in the upper run (16) of the conveyor, remain seated on the retaining means at the transition to the lower run (17) of the conveyor, and a mechanism (28) having a spring (68) loaded centre block (29) for rolling the upper muscle off the sternum (42) of the carcass is tiltable about a horizontal axis (56) between the gate member (30) and the incision device (22, 108).

2. Machine as in claim 1, **characterized in that** a pair of side blocks (44) is reciprocally movable in a direction substanstially lateral to the machine to press the wing joint bones (39) of the carcass towards each other just in front of the gate member (30).

3. Machine as in claim 1 or 2, **characterized in that** the retaining means (20) are provided with two protrusions (36) directed forwardly in top view, with outer surfaces positioned in line with the longitudinal surfaces (34) of the retaining means (20), and with barbed, oblique inner surfaces (37), an upwardly directed and forwardly pointed cam (41) being provided at the place where the oblique inner surfaces (37) are connected.

4. Machine as in any of the preceding claims, **characterized in that** the incision device (22) is provided with two incisive knives (106) which cut meat loose from the carcass exactly between the protrusions (36) of the retaining means (20) along downward circular sector paths being transverse to the longitudinal direction of the machine.

5. Machine as in claim 4, **characterized in that** knife-holders (105) of the incision knives (106) are drivable by the retaining means (20) via a lever system (95, 100-104) and are readjustable by means of a spring (97).

6. Machine as in one of the claims 1-3, **characterized in that** the incision device (108) consists of two stationary knives (112) which at an angle of substantially 15° to the moving direction of the carcasses are applied to the ends of knife carriers (113) applied to the frame (1) in an adjustable manner, whilst the retaining means have corresponding recesses (115).

7. Machine as in claim 6, **characterized in that** the conveyor is a caterpillar (16, 17), and in that the gate member consists of two tunnel halves (30) which are foldable about horizontal axes (73).

**Revendications**

1. Machine à lever les filets, servant à enlever les filets de carcasses de volailles éviscérées dont les pattes et les ailes ont déjà été retirées, comprenant un bâti (1) dans lequel est monté un convoyeur (16, 17) mobile et sur lequel sont prévus, à distances régulières, un certain nombre de moyens de maintien (20) pour faire passer la volaille à travers un dispositif d'incision (22, 108) et à travers un organe formant une porte (30), placé sur le brin inférieur (17) du convoyeur et destiné à détacher les filets de la carcasse par poussée, un moyen (107) pour assurer que les carcasses à traiter, lesquelles sont placées dans les moyens de maintien (20) sur le brin supérieur (16) du convoyeur, restent en place sur ces moyens, à la transition menant au brin inférieur (17) du convoyeur, ainsi qu'un mécanisme (28) possédant un bloc central (29), chargé par un ressort (68) pour détacher par roulement, le muscle supérieur du sternum (42) de la carcasse, et inclinable autour d'un axe horizontal (56) entre l'organe formant porte (30) et le dispositif d'incision (22, 108).

2. Machine selon la revendication 1, caractérisée en ce qu'une paire de blocs latéraux (44) est mobile en va-et-vient dans une direction sensiblement transversale à la machine pour presser les os d'articulation des ailes (39) de la carcasse l'un vers l'autre, juste devant l'organe formant porte (30).

3. Machine selon la revendication 1 ou 2, caractérisée en ce que les moyens de maintien (20) sont pourvus de deux saillies ou crocs (36), dirigés vers l'avant, vus d'en haut, qui possèdent des faces externes alignées avec les faces longitudinales (34) du moyen de maintien (20), ainsi que des faces internes obliques (37), garnies d'ardillons, une saillie (41) dirigée vers le haut et pointue à l'avant étant prévue à l'endroit où les faces internes obliques (37) se rejoignent.

4. Machine selon l'une quelconque des revendications précédentes, caractérisée en ce que le dispositif d'incision (22) est pourvu de deux lames d'incision (106) qui, par une action de coupe, détachent de la chair de la carcasse exactement entre les crocs (36) du moyen de maintien (20), le long de trajets en secteur de cercle s'étendant vers le bas, trajets qui sont transversaux à la direction longitudinale de la machine.

5. Machine selon la revendication 4, caractérisée en ce que des porte-lames (105) pour les lames d'incision (106) sont commandés par le moyen de maintien (20) par l'intermédiaire d'un système à levier (95, 100-104) et sont ajustables au moyen d'un ressort (97).

6. Machine selon une des revendications 1-3, caractérisée en ce que le dispositif d'incision (108) comporte deux lames fixes (112) appliquées sous un angle de sensiblement 15° par rapport à la direction de défilement des carcasses aux extrémités de porte-lames (113) fixés de façon réglable au bâti (1), tandis que les moyens de maintien possèdent des rentrants (115) correspondants.

7. Machine selon la revendication 6, caractérisée en ce que le convoyeur est un convoyeur à palettes articulées (16, 17) et que l'organe formant porte est constitué de deux moitiés d'un tunnel (30), montées pliantes autour d'axes horizontaux (73).

**Ansprüche**

1. Filetiervorrichtung zum Entfernen der Filets vom Körper eines ausgenommenen Geflügels, dessen Beine und Flügel bereits entfernt sind, bestehend aus einem Rahmen (1), in welchen ein antreibbarer Förderer (16, 17) befestigt ist, auf dem in regelmäßigen Abständen eine Anzahl von Rückhaltemitteln (20) vorgesehen ist, um das Geflügel durch eine Einschneidevorrichtung (22, 108) und durch ein in der unteren Bahn (17) des Förderers angeordnetes Torglied zu bewegen, um die Filets vom Körper zu schieben, Mittel (107), um zu gewährleisten, daß der Körper weiter verarbeitet wird, welche in der oberen Bahn (16) des Förderers auf die Rückhaltemittel (20) gesetzt sind und beim Übergang zur unteren Bahn (17) des Förderers auf dem Rückhaltemittel sitzen bleiben, und ein Mechanismus (28), der eine federbeaufschlagte (68) Mittensperrung (29) zum Abrollen des oberen Muskels vom Brustbein (42) des Körpers, welcher Mechanismus (28) kippbar ist um eine horizontale Achse (56) zwischen dem Torglied (30) und der Einschneidevorrichtung (22, 108).

2. Vorrichtung nach Anspruch 1 , dadurch gekennzeichnet, daß ein Paar von Seitensperrungen (44) gegeneinander beweglich ist in einer Richtung im wesentlichen quer zur Maschine, um die Flügelgelenkknochen (39) des Körpers unmittelbar vor dem Torglied (30) gegeneinander zu pressen.

3. Vorrichtung nach Anspruch 1 oder 2, dadurch gekennzeichnet, daß die Rückhaltemittel (20) mit zwei in Draufsicht vorwärts gerichteten Vorsprüngen (36) versehen sind, mit äußeren Oberflächen, die mit den längslaufenden Oberflächen (34) der Rückhaltemittel (20) übereinstimmendangeordnet sind, und mit widerhakenden, schrägen inneren Oberflächen (37), wobei ein aufwärts gerichteter und nach vorne spitzer Nocken (41) an der Stelle vorgesehen ist, an der die schrägen inneren Oberflächen (37) verbunden sind.

4. Vorrichtung nach einem der vorhergehenden Ansprüche, dadurch gekennzeichent, daß die Einschneidevorrichtung (22) mit zwei Einschnittsmessern (106) vorgesehen ist, welche Fleisch von dem Körper exakt zwischen den Vorsprüngen (36) des Rückhaltemittels (20) entlang einem abwärts kreisförmigen Sektorweg losschneiden, welcher quer zu einer Längserstreckungsrichtung der Vorrichtung verläuft.

5. Vorrichtung nach Anspruch 4, dadurch gekennzeichnet, daß Messerhalter (105) der Einschneidemesser (106) antreibbar sind durch die Rückhaltemittel (20) über ein Hebelsystem (95, 100 bis 104) und rückstellbar mittels einer Feder (97).

6. Vorrichtung nach einem der Ansprüche 1 bis 3, dadurch gekennzeichnet, daß die Einschneidevorrichtung (108) aus zwei feststehenden Messern (112) bestehend, welche mit einem Winkel von etwa 15° zur Bewegungsrichtung des Körpers an den Enden von Messerhaltern (113) in einstellbarer Weise am Rahmen (1) angebracht sind, während die Rückhaltemittel korrespondierende Aussparungen (115) haben.

7. Vorrichtung nach Anspruch 6, dadurch gekennzeichnet, daß der Förderer eine Raupe (16, 17) ist und daß das Torglied aus zwei Tunnelhälften (30) besteht, welche um horizontale Achsen (73) klappbar sind.

FIG.1

FIG.2

**FIG. 3**

**FIG. 4**

**FIG. 6**

**FIG. 5**

FIG. 7

FIG. 8

FIG. 9

FIG. 10

EP 0 207 553 B1

71

70

70'

62

69

29

61

**FIG.11**

71

70

71

29

69

69

62

**FIG.12**

63

**FIG.13**

**FIG.14**

63

58

28

28

56

58

56

57

57

64

65

64    65

13

78 77 81 82

80 **FIG. 15** 30

81 82

79

30 30

78 **FIG. 16**

30

78 80 79

77 81 82

**FIG. 17**

83

84

31 85 **FIG. 18**

32 92

89

32 91

90 89

89 90

**FIG. 19** **FIG. 20**

FIG. 21

FIG.23

FIG. 22

EP 0 207 553 B1

FIG. 24

FIG.25

FIG.26

FIG. 27

FIG. 28

EP 0 207 553 B1

FIG. 29

FIG.30